# EUROPEAN PATENT SPECIFICATION

(11) **EP 3 372 631 B1**
(45) Date of publication and mention of the grant of the patent: **16.06.2021**
(21) Application number: 17159803.0
(22) Date of filing: 08.03.2017
(51) Int. Cl.: C08J 9/00, C08J 9/06

(54) **FLEXIBLE FOAM WITH IMPROVED INSULATION PROPERTIES**
WEICHSCHAUMSTOFF MIT VERBESSERTEN ISOLIERUNGSEIGENSCHAFTEN
MOUSSE FLEXIBLE PRÉSENTANT DE MEILLEURES PROPRIÉTÉS D'ISOLATION

(43) Date of publication of application: 12.09.2018
(73) Proprietor: Armacell Enterprise GmbH & Co. KG, 12529 Schönefeld OT Waltersdorf (DE)
(72) Inventor: ZAUNER, Christoph, 48366 Laer (DE); BETTERMANN, Miroslav, 47138 Duisburg (DE)
(74) Representative: von Füner, Nicolai

(56) References cited:
- EP-A1- 3 006 491
- KR-B1- 101 616 938
- US-A1- 2016 251 491

## Description

### Field of the invention

The present invention relates to a flexible, flame resistant material for thermal insulation comprising an expanded polymer (blend) based on at least one elastomer and at least one brominated polymeric flame retardant, the process of manufacturing such a material, and the use of such a material.

### Background of the invention

KR-B1-10 1616938 refers to a rubber foam which is improved in ozone resistance and heat insulation based on a mixture of polyvinyl chloride, nitrile butadiene rubber (NBR) and ethylene propylene diene rubber (EPDM) and relates to a rubber foam excellent in ozone resistance and heat insulation.

The thermal conductivity of insulation foams is determined by three factors: thermal conductivity of the matrix (polymer compound), thermal conductivity of the gas inside the cells and thermal radiation. Reversely, such levers impact thermal conductivity and enable their reduction in polymeric insulation foams.

Due to the lower thermal conductivity of the gas inside the cells compared to the polymer matrix, one approach is the reduction of the share of such matrix, i.e. a density reduction of the foam. Unfortunately, this approach is limited by the used materials and processes. Furthermore, improvements are not feasible or do not have a significant impact, as the share of the polymer matrix is already quite low within most of the commercially available flexible elastomeric foams (FEFs).

A reduction of thermal conductivity of the polymer matrix itself or the gas inside the cells would be another approach. Unfortunately, the use of lower thermal conductivity gases is limited by several reasons: Many of such materials impact the ozone layer and/or have an increased global warming potential, or they are not capable of achieving foams of very low densities. In addition, the resulting foams need to be protected from outgassing / permeation of such gases by additional barrier layers, e.g. aluminium foil. To ensure a long-term and stable low thermal conductivity, every damage of the barrier needs to be prevented. Therefore, such materials cannot be sliced, or cut after application of the barrier. In this context, also vacuum insulated panels need to be mentioned (such as EP2910838 and WO2016165984). These materials have identical disadvantages and in addition, they are not flexible.

Regarding the reduction of thermal conductivity of the polymer matrix, there are again several limitations: Within flexible elastomeric foams (FEF), huge amounts of fillers, flame retardants and other inorganic additives are required to achieve the desired properties in combination with a very high flame resistance. Such a high flame resistance - especially for sheets - can only be achieved by FEF foams. Unfortunately, the thermal conductivity - in particular of inorganic fillers - is significantly higher compared to polymers. Thus, a lower thermal conductivity could be achieved by increasing the polymer share, but would otherwise lead to a deterioration of flame resistance.

Finally, also the thermal radiation could be reduced. The thermal radiation is influenced by the properties of the gases inside the cells, their composition and the cell size of the foam. Due to aforementioned issues of using low thermal conductivity gases or gas mixtures, such an approach is not useful for most insulation applications where flexible foams are required. Thus, only the reduction of cell sizes is left over to reduce thermal radiation. Although a lot of improvements were made during the last years, a significant step forward can only be achieved when gas molecules do not mainly interact with one another, but instead move in straight lines between the cell surface. This effect is known as Knudsen flow or Knudsen diffusion. As soon as the quotient of mean free path of the gas molecules and the diameter of the cells is < 0,5, thermal radiation cannot take place anymore. To achieve such a characteristic, the cell size needs to be (in detail depending on cell gas and temperature) in the nanometer range. Due to the difficulties in processing such materials, significantly higher foam densities (caused by a higher amount of cell walls with regard to an equal volume, resulting in significantly thinner cell walls) and a lack of flexibility, they are not an alternative to flexible elastomeric foams (FEFs).

Commercially available flexible elastomeric foams (FEFs) currently achieve a thermal conductivity of ≤ 0,033 W/m*K @ 0°C according to DIN EN ISO 8497/ DIN EN 12667 (e.g AF/Armaflex®, Kaiflex® KKplus, K-Flex® ST). FEFs or in general flexible insulation foams of lower thermal conductivity are not available, especially when high flame retardant properties according to EN 13501-1 ("SBI-Test") of at least "C-s3, d0", preferably of "B-s3, d0" are required (see for example EP2450398 and EP2261305). Other design based features have been introduced in the past for improved thermal conductivity, such as introduction of additional voids (US20040126562), but the improvements have not been very significant.

Due to the increasing demands of insulating properties of FEFs, wall thicknesses and thus the required space increase permanently. As this leads to increasing space requirements for installations in total and therefore narrows the available space - especially inside ships, industrial installations, buildings, etc. - there is a huge demand for insulation materials that achieve an equal insulation performance at thinner wall thicknesses.

### Summary of the invention

Therefore, it would be favourable to have a flexible elastomeric foam with improved insulation properties of ≤ 0,031 W/m*K, preferably ≤ 0,030 W/m*K @ 0°C (according to DIN EN ISO 8497 / DIN EN 12667) while at least maintaining current low densities (≤ 60 kg/m³, preferably ≤ 55 kg/m³, especially preferred ≤ 50 kg/m³ according to DIN EN ISO 845) and achieve excellent flame resistance of at least "C-s3, d0", preferably at least "B-s3, d0" according to EN 13501-1 as well as Class A rating (25/450) according to ASTM E84. Surprisingly, it is found that such a versatile material not showing any of the aforementioned disadvantages can be achieved by expanding and crosslinking a polymer (blend) comprising at least one elastomer and at least one brominated polymeric flame retardant according to claim 1.

The material furthermore comprises at least one crosslinking agent, at least one chemical blowing agent, at least one filler and optionally further additives to fulfil modern regulations and approvals in the respective application field. This material can be continuously extruded, crosslinked and expanded to a final product density of ≤ 60 kg/m³, preferably ≤ 55 kg/m³, especially preferred ≤ 50 kg/m³ according to DIN EN ISO 845.

The present material comprises at least one layer of expanded polymer (blend). All quantities concerning the present material are related to a total of 100 phr of polymer content. The polymer content according to this invention does not include the polymeric flame retardant.

The total amount of material always comprises the aforementioned 100 phr of the polymer, too. The overall quantities of all ingredients sum up to at least 200 phr, preferably at least 300 phr, but less than 1000 phr, preferably less than 700 phr. Such quantities include the amount of chemical blowing agent, although this is decomposed during processing. In other words, the polymer content related to the overall quantity of all ingredients is ≤ 50 wt%, preferably ≤ 33,3 wt%, but ≥ 10,0 wt%, preferably ≥ 14,3 wt%. The given percentages are rounded to the first decimal place.

The 100 phr of the polymer content comprise at least one elastomer or thermoplastic/elastomer-blend, of which at least one is a sulphur and/or metal oxide crosslinkable elastomer. Preferred are combinations of at least one sulphur and/or metal oxide crosslinkable elastomer and at least one halogenated, preferably chlorinated thermoplastic in a ratio of thermoplastic to elastomer of 3:1 to 1:10. Especially preferred are blends comprising - on the one hand - acrylonitrile butadiene rubber (NBR) and/or polychloroprene (CR) and/or ethylene propylene diene rubber (EPDM) and-on the other hand - polyvinyl chloride (PVC, including its copolymers and terpolymers) and/or chlorinated polyethylene (CPE). Such blends preferably sum up to at least 80 phr. The best results can be achieved in blends of either NBR/PVC, NBR/CPE, CR/CPE or EPDM/CPE.

Additionally, the polymer content of the present material may comprise all kinds of elastomers or thermoplastic elastomers, like ACM/AEM (arylic elastomers), AU/EU (polyurethanes), BR (butadiene rubber), BIIR (bromobutyl rubber), CIIR (chlorobutyl rubber), (G)(E)CO (epichlorohydrin elastomers), EP(D)M (ethylene propylene (diene) rubber), EVM (ethylene/vinylacetate copolymers), SBR (styrene butadiene rubber), (H)NBR ((hydrogenated) nitrile butadiene rubber), FKM/F(E)PM (fluoroelastomers), GPO (propylene oxide rubber), IR (isoprene rubber), IIR (isobutylene isoprene rubber), (V)MQ (silicone rubber), NR (natural rubber), T (polysulfide rubber). Furthermore, the present material may comprise further polymers like PE (polyethylene), PP (polypropylene), PET (polyethylene terephthalate), PBT (polybutylene terephthalate), PC (polycarbonate), PS (polystyrene), PA (polyamide), PU (polyurethane), PTFE (polytetrafluoroethylene), PMMA (polymethyl methacrylate) etc. Preferably at least 3 phr of polybutadiene (butadiene rubber, BR) are used to improve processability and curing. BR will improve the gas tightness in the early stage of vulcanisation and expansion due to its high curing rate, especially when using either CR or NBR grades of high acrylonitrile content.

The acrylonitrile butadiene rubber (NBR) has a acrylonitrile content of 15-50 wt%, preferably 20-35 wt%, due to best compatibility with PVC and well balanced properties (cure rate, low temperature flexibility, etc.) at this level. The Mooney viscosity (ML1+4 at 100°C) is 20 to 100, preferably 40 to 80 Mooney units. The polychloroprene (CR) can be chosen from the group of sulphur-, xanthogen- or mercaptan-modified types, preferred are mercaptan modified grades. The polychloroprene can be used with Mooney viscosities (ML1+4 at 100°C) from 25 to 125 Mooney units, preferably from 35 to 70 Mooney units. The ethylene propylene diene rubber (EPDM) comprises ethylidene norbornene (ENB) as a termonomer (diene). The diene content is > 2 wt%, preferably > 5 wt%. Mooney viscosities (ML1+4 at 100°C) from 20 to 100, preferably from 20 to 80 Mooney units are suitable.

The PVC can be a homo-, co- or terpolymer or a mixture thereof, e.g, PVC (polyvinyl chloride), PVC/EVA (polyvinyl chloride / ethylene vinyl acetate), PVC/VA (polyvinyl chloride / vinyl acetate), etc. The chlorinated polyethylene homopolymer (CPE) shows a chlorine content of at least 20 wt%, preferably at least 25 wt%, especially preferred at least 35 wt% (according to ISO 1158). A chlorine content of 25 wt% or higher leads to a material of elastomeric behaviour, while a chlorine content of at least 35 wt% abolishes the crystallinity of the polyethylene segments, leading to a material of higher flexibility / elasticity.

The present material furthermore comprises at least 40phr, preferably at least 55phr of at least one brominated polymeric flame retardant.

The brominated polymeric flame retardant has preferably a bromine content of at least 50 wt%, preferably at least 60 wt%, especially preferred at least 70 wt%.

Brominated polymeric flame retardants of such a high bromine content enable the substitution of conventional, e.g. brominated flame retardants like decabromodiphenyl ether (Deca-BDE). Such substitutions surprisingly did not impair the flame retardant properties of the present material, although e.g. Deca-BDE has a higher bromine content.

The polymeric flame retardants are preferably of aromatic structure (e.g. brominated epoxy polymer and brominated polyphenyl ether), especially preferred is brominated polyphenyl ether due to its high bromine content, glass transition temperature and temperature resistance, making it usable for FEFs even at application temperatures above 100°C.

The share of polymer(s) and the at least one polymeric flame retardant - related to the overall quantity of all ingredients - sums up to ≥ 20 wt%, preferably ≥ 30 wt%. Halogenated polyphenyl ethers have been used in the past to improve flame retardancy of solid thermoplastics, such as polyamides (US4873276), ABS and polycarbonates (US8889770 and US4355126), and recently also for polyolefins (US2011184107). Only very recently such additives have been successfully used for foam applications, more specifically in polyethylene based foamed beads (US20160009888), but no improvement in thermal conductivity has been reported prior to this invention. Enhanced cell size has been reported only in case of extruded styrenic foams (US2016229970), but the level of bromine in the brominated polymer is significantly lower than in this invention, and fire retardancy is significantly worse.

The present material may further comprise at least 60 phr, preferably at least 100 phr, especially preferred at least 150 phr of at least one inorganic filler (including carbon black), preferably of metal and/or half metal chalcogen (i.e. compound of oxygen, sulphur) nature. The inorganic filler may be an aluminium compound, such as aluminium silicates, oxides, hydroxides etc., e.g. ATH (aluminium hydroxide), and/or a silicon based compound, such as silicates, quartz, zeolites etc., or mineral based accordingly, e.g. gypsum, clay, huntite, hydromagnesite, perlite, vermiculite, chalk, slate, graphite, talc/mica etc., or any mixtures thereof. Preferred are inorganic fillers that cool down the fire by releasing water at temperatures above 180°C, or dilute or inhibit the oxygen supply of the flame by the release of carbon dioxide, carbon monoxide, etc. at temperatures above 180°C. Especially preferred are aluminium hydroxide (ATH), magnesium hydroxide, huntite and hydromagnesite due to the high level of water release. Furthermore, such materials do not increase the smoke development.

The present material may comprise at least 15 phr, preferably at least 25 phr, especially preferred at least 35 phr - related to the polymer content - of at least one plasticizer. The plasticizers should have a positive impact on flame retardancy. Therefore, preferred plasticizers are phosphate plasticizers or chlorinated plasticizers or mixtures thereof. The chlorinated plasticizers are preferably chloroparaffins and/or chlorinated fatty acid substituted glycerines and/or chlorinated alpha-olefins having a chlorine content of at least 20 wt%, preferably at least 30 wt%, especially preferred at least 40 wt% according to DIN 53474. Especially preferred are long chain chlorinated plasticizers of C > 17 (LCCP).

Such highly chlorinated, long chain materials have the greatest fire retardant impact and are - in contrast to short or medium chain chlorinated plasticizers - not persistent, bio-accumulative or toxic. In addition, such plasticizers are still liquid at room temperature (19° -23°C) and therefore significantly reduce the viscosity even at low processing temperatures (< 80°C). Furthermore, such plasticizers have significantly less negative impact on smoke development in comparison to brominated flame retardants.

The phosphate plasticizers can be aliphatic, chloroaliphatic or aromatic phosphoric acid esters or any combinations thereof. Preferred are phosphoric acid esters of high phosphorous content (> 5 wt%, preferably > 8 wt%) and low smoke development; especially preferred is diphenyl 2-ethylhexyl phosphate (DPO) due to its marginal smoke emission, excellent plasticizing effect and low temperature resistance.

The present material may comprise at least one synergist for the halogen containing plasticizers / polymers and polymeric flame retardants, e.g. antimony trioxide, zinc stannate, zinc hydroxystannate, 2,3-Dimethyl-2,3-diphenylbutane, zinc borate, bismuth oxychloride etc. Preferred are antimony (Sb) and/or zinc (Zn) based materials, especially preferred are antimony trioxide and/or zinc stannate. A synergist increases the efficiency of the flame retardants in the reaction to fire in terms of smoke suppression and/or heat release. Depending on the grade of the desired flame protection, only combinations of a synergist and conventional fire retardants can achieve the desired results. When using antimony trioxide in combination with halogenated flame retardants, the highest level of flame retardancy can be achieved, while the use of zinc stannate leads to less smoke development. The weight ratio between the polymeric, halogenated flame retardant and synergist is from 10:1 to 1:1, preferably from 7:1 to 2:1. Such ratio gives the best balance between flame retardancy and costs.

The present material furthermore may comprise at least one crosslinking system such as peroxides, triallylcyanurate, triallylisocyanurate, phenylmaleimide, thiadiazoles, fatty acid amide, hydrosilylation agents, radiation activators (for radiation or UV curing), sulphur systems, bisphenolics, metal oxides etc. Preferred are sulphur and/or metal oxide crosslinking systems due to easy processability and best balance between mechanical properties and costs.

The present material additionally may comprise at least one chemical blowing agent (e.g. releasing carbon dioxide, nitrogen or oxygen) chosen from the classes of organic blowing agents and/or inorganic blowing agents. Preferred are organic blowing agents of nitroso type, azo type and/or aromatic hydrazide type, especially preferred are azo type blowing agents like azodicarbonamide.

The present material furthermore may comprise a heat and/or reversion stabilizer system. The stabilizers can be chosen from the classes of carbon blacks, metal oxides (e.g. iron oxide) and hydroxides (e.g. magnesium hydroxide), metal organic complexes, radical scavengers (e.g. tocopherol derivates), complex silicates (e.g. perlite, vermiculite), and combinations thereof.

The present material may further comprise ingredients like biocides, stabilizers (e.g. versus UV, ozone, reversion etc.), colours etc., of any kind in any ratio, including additives for improving its manufacturing, application and performance, such as inhibitors, retarders, accelerators, etc. The present material may additionally comprise additives for char-forming and/or intumescent additives, like expanding graphite, for general protection purposes and/or to close and protect e.g. wall and bulkhead penetrations. Moreover, the present material may comprise substances that lead to a self-ceramifying effect in case of fire, like silicon containing compounds and/or internal adhesion promoters to ensure self-adhesive properties in co-extrusion and co-lamination applications, such as silicate esters, functional silanes, polyols, etc.

All of the aforementioned ingredients show easy mixing and good dispersion in a wide range of dosage.

The present material can be mixed by standard methods widespread in the rubber industry, e.g. in an internal (Banbury®) mixer, single- or twin-screw extruder or on a mill, preferred are internal mixers. The shaping of the present material can be carried out in extruders, presses, calanders, etc. Preferred are extruders due to the possibilities of easily forming sheets and tubes and vulcanize and expand them continuously within a hot air oven, microwave oven, salt bath, etc. Preferred are hot air and microwave ovens, because - among other things - no additional cleaning steps are necessary.

The present material can be expanded and crosslinked to a density ≤ 60 kg/m³, preferably ≤ 55 kg/m³, especially preferred ≤ 50 kg/m³ according to DIN EN ISO 845. Densities of ≤ 55 kg/m³ or even ≤ 50 kg/m³ are preferred as they lead to lower thermal conductivity and lower costs due to less material consumption.

A major advantage of the present material is the excellent suitability for thermal and acoustic insulation applications. According to DIN EN ISO 8497 / DIN EN 12667, the material achieves a thermal conductivity (λ value) of ≤ 0,031 W/m*K @ 0°C. Due to the low densities that can be realized, the thermal conductivity can be decreased to ≤ 0,030 W/m*K at 0°C when achieving densities ≤ 50 kg/m³. Such lower thermal conductivities can reduce the space required for the insulation - compared to conventional FEFs - by more than 10%.

A prominent advantage of the present material is the suitability for applications where low flame spread is required. The present material is classified as Class A (25/450) according to ASTM E84 / CAN ULC S 102.

Various classification levels are achievable according to EN ISO 13823 (SBI-test), depending on the use and ratio of fillers, flame retardants, synergists etc. The present material is at least classified as C_{L}-s3, d0 / C-s3,d0, but also B_{L}-s3,d0 / B-s3, d0 classifications as well as B-s2, d0 and B_{L}-s2,d0/ B_{L}-s1,d0 are feasible. All aforementioned classifications can be achieved without additional coverings, coatings, post-treatments.

It is a linked advantage of the present material that it can achieve such classifications without the use of conventional brominated or boron containing flame retardants like decabromodiphenyl ether (Deca-BDE) as they are still widespread and standard in the industry. Many of such flame retardants are suspected to be persistent, bioaccumulative and toxic to both humans and the environment.

It is a prominent advantage of the present material that the viscosity significantly decreases during vulcanization/expansion due to the softening of CPE, PVC and polymeric flame retardants and thus absorbs excess enthalpy created by the exothermic expansion process. This leads to a very stable, tolerant and robust manufacturing process. In addition, CPE, PVC and polymeric flame retardants stabilize the foam when cooling down, leading to improved strength and lower shrinkage.

Another advantage of the present material is the possibility of using high amounts of PVC and / or its copolymer(s) and or terpolymer(s), which are available in large amounts at low costs and improve the flame retardancy.

Another advantage of the present material is that no conventional plasticizers are needed, like phthalate plasticizers, short or medium chain chloroparaffins (C<18), which are suspected of being e.g. persistent, bio-accumulative, toxic etc.

A further advantage of the present material is the excellent flexibility, cuttability and bondability leading to a fast and easy applicability during installation.

It is a prominent advantage of the present material that it can easily be glued with standard polychloroprene based contact adhesives, acrylate and/or styrene block copolymer based pressure sensitive adhesives (PSAs) and/or hot melt adhesives which leads to air and water tight sealings.

The present material provides high water vapor transmission (WVT) values of ≥ 5.000, preferably ≥ 7.000, especially preferred ≥ 10.000 according to EN 13469 / EN 12086. Such WVT values are increased when using brominated polymeric flame retardants instead of conventional brominated flame retardants like Deca-BDE or chlorinated ones like chloroparaffins. Due to this, the thinner wall thickness that can be applied due to the lower thermal conductivity of the foam show equal or even better water vapour barrier properties, determined by an increased WVT value.

Therefore, the material can be used for low temperature insulation (< 0°C), because the object to be insulated is well protected from under insulation corrosion (UIC) through condensation of humidity.

It is a linked advantage that the material has a high degree of closed cells, determined by a vacuum water absorption of < 5,0%, preferably < 2,5% according to ASTM D 1056.

Another advantage of the present material is its versatility regarding the production equipment. It can be produced economically in a continuous process, e.g. by extrusion or co-extrusion. The material can also be laminated, moulded, co-moulded, overmoulded, welded etc. directly as mono- or multilayer system and thus it can be applied in unrestricted shaping onto various surfaces in automotive, transport, aeronautics, building and construction, marine and offshore, furniture, machinery engineering and many other industries, even by thermoforming or other shaping methods. The present material can particularly be manufactured in the form of tubes and sheets in a continuous process in various wall thicknesses and inner diameters; most suitable are wall thicknesses between 3 and 50 mm.

### Examples

The following examples according to the present invention and comparative examples were manufactured in a three step process: first of all mixing of the compound, afterwards extrusion (shaping) and finally expansion and crosslinking.

The compounds were mixed in an internal mixer with an average mixing time of 10 minutes and an average dumping temperature of 145°C for compounds comprising PVC and 120°C for compounds without PVC. The compounds were further homogenized on a roller mill and the crosslinking system and azodicarbonamide as blowing (expansion) agent were added during such step.

Extrusion was performed on a strip feeded single screw vacuum extruder providing unexpanded sheets and tubes. Those were crosslinked and expanded simultaneously in a hot air oven cascade of five ovens to sheets of 25 mm wall thickness and tubes of 25 mm wall thickness and 22 mm inner diameter. Table 1 lists the raw materials used for the compounds. Table 2 gives an overview about the recipes of the evaluated compounds and Tables 3 and 4 comprise the technical properties of the foamed and crosslinked material.

**Table 1: Raw materials**

| **Chemical Name** | **Trade Name** | **Supplier** |
|---|---|---|
| Polychloroprene (CR) | Neoprene® WM-1 | DuPont®, USA |
| Acrylonitrile butadiene rubber (NBR) | Europrene® N 2860 | Polimeri Europe, Italy |
| Butadiene rubber (BR) | Buna® CB 24 F | Lanxess, Germany |
| Polyvinyl chloride (PVC) | Vinnolit® S3265 | Vinnolit, Germany |
| Vinyl chloride vinyl acetate copolymer (PVC/VA) | Kanevinyl™ MB1008 | Kaneka Corporation, Japan |
| Chlorinated Polyethylene (CPE) | Elaslen® 401AY | Showa Denko, Japan |
| Chloroparaffin (CP1) | Cereclor® 46 | Ineos® Chlor Ltd., Switzerland |
| Chloroparaffin (CP2) | Hordaflex® LC 70 | Leuna Tenside GmbH, Germany |
| Diphenyl-2-ethylhexyl phosphate (DPO) | Disflamoll® DPO | Lanxess, Germany |
| Carbon black (CB) | Corax® N550 | Evonik Industries, Germany |
| Aluminium hydroxide (ATH) | AluMill® F280 | Europe Minerals, Netherlands |
| Huntite / hydromagnesite mixture (HH) | Securoc® C10 | Ankerport, Netherlands |
| Antimony trioxide (ATX) | Triox® | Produits Chimiques de Lucette, France |
| Azodicarbonamide (ADC) | Unicell® D 300 K | Tramaco, Germany |
| Decabromodiphenyl ether (Deca-BDE) | Saytex® 102 E | Albemarle, France |
| Brominated polyphenyl ether (BPPE) | Emerald Innovation™ 1000 | Great Lakes, USA |
| Tribromophenol end-capped brominated epoxy (ECBE) | F-3014 | ICL Industrial Products, Israel |

**Table 2: Comparative and innovative polymeric material**

| | 1* | 2* | 3* | 4 | 5 | 6 | 7 | 8 |
|---|---|---|---|---|---|---|---|---|
| Acrylonitrile butadiene rubber (NBR) | 60,0 | --- | 60,0 | 60,0 | 60,0 | 60,0 | --- | --- |
| Polychloroprene (CR) | --- | 70,0 | --- | --- | --- | --- | 70,0 | 70,0 |
| Butadiene rubber (BR) | 5,0 | 10,0 | 5,0 | 5,0 | 5,0 | 5,0 | 10,0 | 10,0 |
| Polyvinyl chloride (PVC) | 15,0 | --- | 15,0 | 15,0 | 15,0 | 15,0 | --- | --- |
| Vinyl chloride vinyl acetate copolymer (PVC/VA) | 20,0 | --- | 20,0 | 20,0 | 20,0 | 20,0 | --- | --- |
| Chlorinated Polyethylene (CPE) | --- | 20,0 | --- | --- | --- | --- | 20,0 | 20,0 |
| Chloroparaffin (CP1) | 60,0 | 5,0 | 60,0 | 60,0 | 60,0 | 60,0 | 5,0 | 5,0 |
| Chloroparaffin (CP2) | --- | 80,0 | --- | --- | --- | --- | 30,0 | 5,0 |
| Diphenyl-2-ethylhexyl phosphate (DPO) | 5,0 | --- | 5,0 | 5,0 | 5,0 | 5,0 | --- | --- |
| Carbon black (CB) | 10,0 | 1,0 | 10,0 | 10,0 | 10,0 | 10,0 | 1,0 | 1,0 |
| Aluminium hydroxide (ATH) | 60,0 | 220,0 | 60,0 | 60,0 | 60,0 | 60,0 | 220,0 | 220,0 |
| Huntite / hydromagnesite mixture (HH) | 40,0 | --- | 40,0 | 40,0 | 40,0 | 40,0 | --- | --- |
| Antimony trioxide (ATX) | 7,0 | 3,0 | 7,0 | 7,0 | 7,0 | 7,0 | 3,0 | 3,0 |
| Azodicarbonamide (ADC) | 48,0 | 50,0 | 48,0 | 48,0 | 48,0 | 48,0 | 50,0 | 50,0 |
| Decabromodiphenyl ether (Deca-BDE) | 63,0 | --- | 38,0 | 18,0 | 18,0 | --- | --- | --- |
| Brominated polyphenyl ether (BPPE) | --- | --- | 25,0 | 45,0 | --- | 63,0 | 50,0 | 75,0 |
| Tribromophenol end-capped brominated epoxy (ECBE) | --- | --- | --- | --- | 45,0 | --- | --- | --- |
| Additives, crosslinking agents, etc. (AD) | 30,0 | 28,0 | 30,0 | 30,0 | 30,0 | 30,0 | 28,0 | 28,0 |
| ∑ | 423,0 | 487,0 | 423,0 | 423,0 | 423,0 | 423,0 | 487,0 | 487,0 |

| | | | | | | | | |
|---|---|---|---|---|---|---|---|---|
| * = comparative examples | | | | | | | | |

Table 3 presents the density (according to DIN EN ISO 845), thermal conductivity at 0°C (according to DIN EN ISO 8497 / DIN EN 12667) and water vapour transmission (WVT, according to EN 13469 / EN 12086).

It clearly points out that polymeric flame retardants have a significant impact on thermal conductivity of crosslinked and expanded insulation foams. Additionally, it also increases the WVT value, means decreases water vapour transmission through the material.

**Table 3: Technical properties**

| Material | Density | Thermal conductivity | WVT |
|---|---|---|---|
| | [kg/m^{3]} | [W/(m*K)] @ 0°C | |
| 1* | 48 | 0,0325 | 11300 |
| 2* | 58 | 0,0352 | 8400 |
| 3* | 49 | 0,0328 | 11200 |
| 4 | 48 | 0,0302 | 12500 |
| 5 | 50 | 0,0309 | 11300 |
| 6 | 48 | 0,0291 | 13100 |
| 7 | 52 | 0,0309 | 9100 |
| 8 | 49 | 0,0298 | 10300 |

| | | | |
|---|---|---|---|
| * = comparative examples | | | |

Table 4 shows that also the burning behaviour is not impacted in a negative way if a sufficient amount of polymeric, brominated flame retardant is used. The smoke development can rather be decreased when substituted against conventional, brominated flame retardants like decabromodiphenyl ether.

**Table 4: Flammability test results**

| Material | SBI (EN 13823) | | ASTM E 84 |
|---|---|---|---|
| | sheets | tubes | sheets |
| 1* | B-s3, d0 | B_{L-}s3, d0 | 10/300 |
| 2* | B-s2, d0 | B_{L-}s1, d0 | 10/25 |
| 3* | B-s3, d0 | B_{L-}s3, d0 | 15/300 |
| 4 | B-s3, d0 | B_{L-}s3, d0 | 15/130 |
| 5 | B-s3, d0 | B_{L-}s3, d0 | 15/200 |
| 6 | B-s3, d0 | B_{L}-s2, d0 | 10/70 |
| 7 | B-s2, d0 | B_{L}-s2, d0 | 15/30 |
| 8 | B-s2, d0 | B_{L}-s1, d0 | 20/40 |

| | | | |
|---|---|---|---|
| * = comparative examples | | | |

## Claims

1. An expanded polymeric material which consists of at least 200 phr, preferably at least 300 phr, but less than 1000 phr, preferably less than 700 phr ingredients in total, comprising
a. 100 phr of at least one polymer, of which at least one is a sulphur and/or metal oxide crosslinkable elastomer and
b. at least 40 phr, preferably at least 55 phr of at least one brominated polymeric flame retardant.

2. The material according to claim 1, wherein the elastomer comprises at least 50 phr of acrylonitrile butadiene rubber (NBR) and/or polychloroprene (CR) and/or ethylene propylene diene rubber (EPDM).

3. The material according to claim 1, wherein the 100 phr of polymer comprise at least 80 phr of a blend of at least one thermoplastic, preferably a halogenated thermoplastic and at least one sulphur and/or metal oxide crosslinkable elastomer in a ratio of thermoplastic to elastomer of 3:1 to 1:10.

4. The material according to claim 3, wherein the 80 phr of a blend consist of
a. acrylonitrile butadiene rubber (NBR) and polyvinyl chloride (PVC, including its copolymers and terpolymers) or
b. acrylonitrile butadiene rubber (NBR) and chlorinated polyethylene (CPE) or
c. polychloroprene (CR) and chlorinated polyethylene (CPE) or
d. ethylene propylene diene rubber (EPDM) and chlorinated polyethylene (CPE).

5. The material according to any of claims 1 to 4, wherein the thermal conductivity (λ value) is ≤ 0,031 W/m*K @ 0 °C, preferably ≤ 0,030 W/m*K @ 0 °C according to DIN EN ISO 8497 / DIN EN 12667.

6. The material according to any of claims 1 to 5, wherein the brominated, polymeric flame retardant has a bromine content of at least 50 wt%, preferably at least 60 wt%, especially preferred at least 70 wt%.

7. The material according to any of claims 1 to 6, wherein the brominated polymeric flame retardant has an aromatic structure, preferred is brominated polyphenyl ether.

8. The material according to any of claims 1 to 7, wherein the share of polymer and polymeric flame retardant - related to the overall quantity of all ingredients - sums up to ≥ 20 wt%, preferably ≥ 30 wt%.

9. The material according to any of claims 1 to 8, comprising at least 60 phr, preferably at least 100 phr, especially preferred at least 150 phr of at least one inorganic filler.

10. The material according to any of claims 1 to 9, comprising at least one plasticizer which is present in the formulation in at least 15 phr, preferably at least 25 phr, especially preferred at least 35 phr.

11. The material according to any of claims 1 to 10, which is crosslinked by at least one sulphur and/or metal oxide crosslinking system.

12. The material according to any of claims 1 to 11, comprising at least one synergist for the polymeric flame retardants, preferably antimony (Sb) and/or zinc (Zn) based materials, especially preferably antimony trioxide and/or zinc stannate.

13. The material according to any of claims 1 to 12, which is expanded to a density of < 60 kg/m³, preferably < 55 kg/m³, especially preferred < 50 kg/m³ according to DIN EN ISO 845.

14. The material according to any of claims 1 to 13, which has a closed cell structure of < 5,0%, preferably < 2,5% determined by a vacuum water absorption according to ASTM D 1056.

15. The material according to any of claims 1 to 14, which is classified as "Class A" flame retardant according to ASTM E84 / CAN ULC S 102 and/or classified as C_{L}-s3,d0 / C-s3, d0, preferably B_{L}-s3,d0 / B-s3,d0, especially preferred B_{L}-s2,d0 according to EN ISO 13823.

16. A process for manufacturing the material according to any of claims 1 to 15, wherein the polymeric material is expanded by decomposition of a chemical blowing agent, preferably of nitroso type, azo type and/or aromatic hydrazide type, especially preferred is azodicarbonamide.

17. The use of the material according to any of claims 1 to 15 for thermal and/or acoustic insulation.

## Patentansprüche

1. Expandiertes Polymermaterial, das insgesamt aus mindestens 200 phr, vorzugsweise mindestens 300 phr, aber weniger als 1000 phr, vorzugsweise weniger als 700 phr Inhaltsstoffen besteht, umfassend
a. 100 phr zumindest eines Polymers, von dem mindestens eines ein schwefel- und/oder metalloxidvernetzbares Elastomer ist und
b. mindestens 40 phr, vorzugsweise mindestens 55 phr zumindest eines bromierten polymeren Flammschutzmittels.

2. Material nach Anspruch 1, wobei das Elastomer mindestens 50 phr Acrylnitril-Butadien-Kautschuk (NBR) und/oder Polychloropren (CR) und/oder Ethylen-Propylen-Dien-Kautschuk (EPDM) umfasst.

3. Material nach Anspruch 1, wobei die 100 phr des Polymers mindestens 80 phr einer Mischung aus mindestens einem Thermoplasten, vorzugsweise einem halogenierten Thermoplasten und mindestens einem schwefel- und/oder metalloxidvernetzbaren Elastomer in einem Verhältnis von 3:1 bis 1:10 von Thermoplast zu Elastomer enthalten.

4. Material nach Anspruch 3, wobei die 80 phr der Mischung bestehen aus
a. Acrylnitril-Butadien-Kautschuk (NBR) und Polyvinylchlorid (PVC, einschließlich dessen Copolymeren und Terpolymeren) oder
b. Acrylnitril-Butadien-Kautschuk (NBR) und chloriertem Polyethylen (CPE) oder
c. Polychloropren (CR) und chloriertem Polyethylen (CPE) oder
d. Ethylen-Propylen-Dien-Kautschuk (EPDM) und chloriertem Polyethylen (CPE).

5. Material nach einem der Ansprüche 1 bis 4, wobei die Wärmeleitfähigkeit (λ Wert) ≤ 0,031 W/m*K bei 0°C, vorzugsweise ≤ 0,030 W/m*K bei 0°C, gemäß DIN EN ISO 8497 / DIN EN 12667 beträgt.

6. Material nach einem der Ansprüche 1 bis 5, wobei das bromierte, polymere Flammschutzmittel einen Bromgehalt von mindestens 50 Gew.-%, vorzugsweise mindestens 60 Gew.-%, besonders bevorzugt mindestens 70 Gew.-% aufweist.

7. Material nach einem der Ansprüche 1 bis 6, wobei das bromierte polymere Flammschutzmittel eine aromatische Struktur aufweist, wobei bromierter Polyphenylether bevorzugt ist.

8. Material nach einem der Ansprüche 1 bis 7, wobei sich der Anteil an Polymer und polymerem Flammschutzmittel, bezogen auf die Gesamtmenge aller Inhaltsstoffe, auf bis zu ≥ 20 Gew.-%, vorzugsweise ≥ 30 Gew.-% summiert.

9. Material nach einem der Ansprüche 1 bis 8, umfassend mindestens 60 phr, vorzugsweise mindestens 100 phr, besonders bevorzugt mindestens 150 phr zumindest eines anorganischen Füllstoffs.

10. Material nach einem der Ansprüche 1 bis 9, umfassend mindestens einen Weichmacher, der in der Formulierung in mindestens 15 phr, vorzugsweise mindestens 25 phr, besonders bevorzugt mindestens 35 phr enthalten ist.

11. Material nach einem der Ansprüche 1 bis 10, das durch mindestens ein Schwefel- und/oder Metalloxid-Vernetzungssystem vernetzt ist.

12. Material nach einem der Ansprüche 1 bis 11, umfassend mindestens einen Synergisten für die polymeren Flammschutzmittel, vorzugsweise auf Antimon (Sb) und/oder Zink (Zn) basierten Materialien, wobei Antimontrioxid und/oder Zinkstannat besonders bevorzugt sind.

13. Material nach einem der Ansprüche 1 bis 12, das auf eine Dichte von < 60 kg/m³, vorzugsweise < 55 kg/m³, besonders bevorzugt < 50 kg/m³, gemäß DIN EN ISO 845 ausgedehnt ist.

14. Material nach einem der Ansprüche 1 bis 13, das eine geschlossene Zellstruktur von < 5,0%, vorzugsweise < 2,5%, aufweist, bestimmt durch eine Vakuumwasseradsorption gemäß ASTM D 1056.

15. Material nach einem der Ansprüche 1 bis 14, das als Flammschutzmittel der "Klasse A" gemäß ASTM E84 / CAN ULC S 102 klassifiziert ist, und/oder als C_{L}-s3, d0 / C-s3, d0, vorzugsweise B_{L-}s3, d0 / B-s3, d0, besonders bevorzugt B_{L}-s2, d0 gemäß EN ISO 13823 klassifiziert ist.

16. Verfahren zur Herstellung des Materials nach einem der Ansprüche 1 bis 15, wobei das polymere Material durch Zersetzung eines chemischen Treibmittels, vorzugsweise vom Nitroso-Typ, Azo-Typ und/oder aromatischen Hydrazid-Typ, expandiert wird, wobei Azodicarbonamid besonders bevorzugt ist.

17. Verwendung des Materials nach einem der Ansprüche 1 bis 15 zur thermischen und/ oder akustischen Isolierung.

## Revendications

1. Matériau polymère expansé constitué d'au moins 200 phr, de préférence d'au moins 300 phr, mais de moins de 1 000 phr, de préférence de moins de 700 phr d'ingrédients au total, comprenant :
a. 100 phr d'au moins un polymère, dont au moins un est un élastomère réticulable au soufre et/ou à l'oxyde métallique, et
b. au moins 40 phr, de préférence au moins 55 phr d'au moins un ignifuge polymère bromé.

2. Matériau selon la revendication 1, l'élastomère comprenant au moins 50 phr de caoutchouc acrylonitrile-butadiène (NBR) et/ou polychloroprène (CR) et/ou caoutchouc éthylène-propylène-diène (EPDM).

3. Matériau selon la revendication 1, les 100 phr de polymère comprenant au moins 80 phr d'un mélange d'au moins un thermoplastique, de préférence un thermoplastique halogéné, et d'au moins un élastomère réticulable au soufre et/ou à l'oxyde métallique dans un rapport du thermoplastique à l'élastomère de 3:1 à 1:10.

4. Matériau selon la revendication 3, les 80 phr d'un mélange étant constitués de :
a. caoutchouc acrylonitrile-butadiène (NBR) et polychlorure de vinyle (PVC, y compris ses copolymères et terpolymères) ou
b. caoutchouc acrylonitrile-butadiène (NBR) et polyéthylène chloré (CPE) ou
c. polychloroprène (CR) et polyéthylène chloré (CPE) ou
d. caoutchouc éthylène-propylène-diène (EPDM) et polyéthylène chloré (CPE).

5. Matériau selon l'une quelconque des revendications 1 à 4, la conductivité thermique (valeur λ) étant ≤ 0,031 W/m*K à 0°C, de préférence ≤ 0,030 W/m*K à 0°C selon la DIN EN ISO 8497/DIN EN 12667.

6. Matériau selon l'une quelconque des revendications 1 à 5, l'ignifuge polymère bromé ayant une teneur en brome d'au moins 50 % en poids, de préférence d'au moins 60 % en poids, plus préférablement d'au moins 70 % en poids.

7. Matériau selon l'une quelconque des revendications 1 à 6, l'ignifuge polymère bromé ayant une structure aromatique, étant de préférence l'éther de polyphényle bromé.

8. Matériau selon l'une quelconque des revendications 1 à 7, la part de polymère et d'ignifuge polymère - associée à la quantité totale de tous les ingrédients - s'élevant à ≥ 20 % en poids, de préférence ≥ 30 % en poids.

9. Matériau selon l'une quelconque des revendications 1 à 8, comprenant au moins 60 phr, de préférence au moins 100 phr, plus préférablement au moins 150 phr d'au moins une charge inorganique.

10. Matériau selon l'une quelconque des revendications 1 à 9, comprenant au moins un plastifiant qui est présent dans la formulation dans au moins 15 phr, de préférence au moins 25 phr, plus préférablement au moins 35 phr.

11. Matériau selon l'une quelconque des revendications 1 à 10, qui est réticulé par au moins un système de réticulation au soufre et/ou à l'oxyde métallique.

12. Matériau selon l'une quelconque des revendications 1 à 11, comprenant au moins un synergiste pour les ignifuges polymères, de préférence des matériaux à base d'antimoine (SB) et/ou de zinc (Zn), plus préférablement du trioxyde d'antimoine et/ou du stannate de zinc.

13. Matériau selon l'une quelconque des revendications 1 à 12, qui est expansé jusqu'à une densité de < 60 kg/m³, de préférence < 55 kg/m³, plus préférablement < 50 kg/m³ selon la DIN EN ISO 845.

14. Matériau selon l'une quelconque des revendications 1 à 13, qui a une structure à alvéoles fermées de < 5,0 %, de préférence < 2,5 % déterminée par une absorption d'eau sous vide selon l'ASTM D 1056.

15. Matériau selon l'une quelconque des revendications 1 à 14, qui est classé comme ignifuge de « classe A » selon l'ASTM E84 / CAN ULC S 102 et/ou classé comme C_{L}-s3,d0 / C-s3,d0, de préférence B_{L}-s3,d0 / B-s3,d0, plus préférablement B_{L}-s2,d0 selon l'EN ISO 13823.

16. Procédé de fabrication du matériau selon l'une quelconque des revendications 1 à 15, le matériau polymère étant expansé par décomposition d'un agent d'expansion chimique, de préférence de type nitroso, de type azo et/ou de type hydrazide aromatique, étant plus préférablement l'azodicarbonamide.

17. Utilisation du matériau selon l'une quelconque des revendications 1 à 15 pour l'isolation thermique et/ou acoustique.
